# EUROPÄISCHE PATENTSCHRIFT

(11) **EP 0 669 195 B1**
(45) Veröffentlichungstag und Bekanntmachung des Hinweises auf die Patenterteilung: **09.06.1999**
(21) Anmeldenummer: 95102247.4
(22) Anmeldetag: 18.02.1995
(51) Int. Cl.: B29C 44/12, B29C 44/44

(54) **Formkörper aus Verbundmaterial sowie Verfahren zu seiner Herstellung**
Shaped article of composite material and method of making it
Objets moulés en matière composite et procédé de production

(30) Priorität: 24.02.1994 DE 4406039
(43) Veröffentlichungstag der Anmeldung: 30.08.1995
(73) Patentinhaber: Erlenbach GmbH, 56355 Lautert (DE)
(72) Erfinder: Zorn, Bernd, D-56357 Auel (DE)
(74) Vertreter: Fuchs Mehler Weiss & Fritzsche

(56) Entgegenhaltungen:
- WO-A-92/22420
- DE-A- 3 637 660
- DE-A- 3 842 846
- US-A- 4 260 569
- DATABASE WPI Section Ch, Week 9504 Derwent Publications Ltd., London, GB; Class A32, AN 95-027524 & JP-A-06 312 472 ( TAKASHIMAYA HIHATSU KOGYO KK) , 8.November 1994

## Beschreibung

Die Erfindung betrifft einen Formkörper aus Verbundmaterial, das mindestens aus Trägermaterial und Partikelschaum aus Polymeren besteht, und ein Verfahren zur Herstellung eines solchen Formkörpers.

Verbundmaterialien aus Polymeren sind an sich bekannt und werden für die unterschiedlichsten Zwecke eingesetzt. Eine bevorzugte Anwendung ist das Verbinden von leichten Schaumstoff-Formteilen mit einer härteren und damit mechanisch höher belastbaren Deckschicht. Im Verpackungsbereich kann durch so gestaltete Mehrwegverpackungen die aufwendige Entsorgung von Schaumstoff-Einwegverpackungen weitestgehend vermieden werden.

Aus der DE-AS 2622777 B 2 ist ein Verfahren und eine Vorrichtung zum kontinuierlichen Herstellen von Schichtmaterial mit Schaumstoffteilchen bekannt. Eine beliebige Trägerbahn, die auch aus einer Kunststoffolie bestehen kann, wird zunächst an ihrer Oberfläche bis zur Klebfähigkeit erhitzt, und anschließend werden Schaumstoffeilchen aufgebracht und angedrückt. Hierzu werden Schaumstoffteilchen verwendet, die während des Verbindungsprozesses praktisch nicht mehr nachschäumen. Um Schichtmaterial mit einer größeren Dicke herzustellen, werden mehrere Schichten aus Schaumstoffteilchen nacheinander durch Erhitzen der Oberfläche der jeweils letzten Schicht miteinander verbunden. Durch Entfernen der nicht verklebten Schaumstoffteilchen wird sichergestellt, daß auch bei einem nochmaligen Auftrag von Schaumstoffteilchen schichtweise sämtliche in der Schicht verbleibenden Schaumstoffteilchen verbunden sind. Mit diesem Verfahren kann nur bahnenförmiges Material hergestellt werden. Formkörper sind mit diesem Verfahren wegen des schichtweisen Aufbringens der Schaumstoffteilchen nicht herstellbar.

In der US 3,285,795 wird ebenfalls ein Verfahren und eine Vorrichtung zur Herstellung eines bahnenförmigen Materials beschrieben, bei dem die Kunststoffpartikel auf eine beheizte Walze oder auf eine Trägerfolie aufgestreut werden. Im letzten Fall entsteht ein zweilagiges Material, wobei die Schäumpartikel lediglich eine Monolage bilden. Aufgrund der unterschiedlichen Ausdehnungskoeffizienten beider Schichten können aus diesem bahnenförmigen Material beispielsweise Hohlkörper hergestellt werden.

Zur Herstellung von Formkörpern aus Verbundmaterial sind dagegen, wie beispielsweise aus DE-A-3 842 846, Verfahren bekannt, bei denen das Trägermaterial (Folie) in das Schäumwerkzeug der Schäumvorrichtung eingelegt wird. Die Folie wird dann entweder hinterschäumt oder die Folie wird an der Außenseite des in einem separaten Arbeitsgang gefertigten Schaum-Formkörpers angesintert.

So bescheibt die AT 235563 die Herstellung von Formkörpern aus schäumfähigem Kunststoff, bei der Teilchen aus expandierbarem Polystyrol (EPS) in eine Form gefüllt werden, und eine Platte aus thermoplastischem Material aufgelegt wird. Durch Wärmezufuhr wird die Platte zunächst erweicht, und durch Einwirkung eines mechanischen Drucks und weiterer Wärmeeinwirkung verbinden sich die EPS-Teilchen sowohl untereinander als auch mit der Platte.

Aus der EP 0231727 ist ein Verfahren zur Herstellung eines Formkörpers bekannt, bei dem in einer Form zunächst der Schaumkörper hergestellt wird, dieser aus der Form entnommen, und nach dem Einlegen einer Kunststoffolie in dieselbe Form die Folie mit dem vorgefertigten Schaumkörper verbunden wird.

Eine andere bekannte Möglichkeit besteht darin, durch Vakuumformen eine Verformung der Folie im Werkzeug durchzuführen und dann die Folie mit dem Partikelschaum zu verbinden.

Bei den nach den genannten Verfahren hergestellten Formkörpern ist es allerdings nachteilig, daß das Trägermaterial nur ungenügend am Partikelschaum haftet. Hierdurch werden die Stabilität und die Haltbarkeit des Endproduktes stark beeinträchtigt.

Es wurde versucht, diese Haftungsprobleme durch Verwendung von gleichartigen oder identischen Polymermaterialien in den Griff zu bekommen, z.B. durch Verwendung von EPS als Partikelschaum und Polystyrol als Trägermaterial. Eine solche Materialvorgabe engt den Anwendungsbereich jedoch entscheidend ein. Stellt man an das Verbundmaterial beispielsweise die Forderung, daß es bei Temperaturen zwischen 120 und 130 Grad Celcius dampfsterilisierbar sein soll, so scheidet Polystyrol als Trägermaterial aus.

Im Kfz-Bereich kennt man Möglichkeiten, durch Einlegen von z.B. modifizierten Polypropylen-Weichfolien mit oder ohne vorher gegen diese Folien flammkaschierten EVA-modifizierten PP- oder PE-Extrusionsschäumen Partikelschaumverbundfertigteile zu erhalten. Wesentliche Nachteile bestehen in der geringen Warmformbeständigkeit dieser Produkte und in der mangelnden Verbundhaftung. Hinzu kommt noch, daß Folien, die mit einer Narbung bzw. Prägung ausgerüstet sind, bei der Formgebung im Tiefziehautomaten ihre Prägekontur ganz oder teilweise verlieren, was zu optischen Mängeln führt.

Aufgabe der vorliegenden Erfindung ist es, einen Formkörper zu schaffen, der die o.g. Nachteile nicht aufweist, insbesondere sich durch eine gute Haftung des Trägermaterials auf dem Schaumkörper auszeichnet, eine dekorative Oberfläche haben kann, und bei dem das Trägermaterial und der Schaumkörper aus unterschiedlichen Materialien bestehen können. Die Aufgabe betrifft auch die Bereitstellung eines Verfahrens zur Herstellung solcher Formkörper.

Diese Aufgabe wird mit einem Verfahren gemäß den Merkmalen des Patentanspruchs 1 gelöst. Der Formkörper ist Gegenstand des Patentanspruchs 12. Vorteilhafte Ausgestaltungen sind Gegenstand der Unteransprüche.

Das Verfahren sieht vor, daß ein vorgefertigter Verbund aus Trägermaterial und Bindungsschicht in eine Schäumvorrichtung eingelegt, wobei die Bindungsschicht dem auszuschäumenden Hohlraum zugewandt ist. Danach wird der Hohlraum mit Schäumpartikeln zur Herstellung des Formkörpers ausgeschäumt.

Ein wesentlicher Aspekt der Erfindung besteht darin, daß die verwendeten Materialien aufeinander abgestimmt sind. Es hat sich überraschend herausgestellt, daß die Schäumpartikel, die in der Schäumvorrichtung mit dem Trägermaterial verbunden werden, dann weitaus besser am Trägermaterial haften, wenn die Bindungsschicht, die zuvor in einem eigenen Verfahrensschritt auf das Trägermaterial aufgebracht wurde, aus demselben Polymermatrixmaterial besteht wie die Schäumpartikel.

Der vorgefertigte Verbund aus Trägermaterial und Bindungsschicht wird in einem vorgeschalteten Verfahrensschritt hergestellt, in dem das Trägermaterial mit der Bindungsschicht versehen wird.

Die Bindungsschicht kann auf unterschiedliche Weise hergestellt werden. Gemäß einer bevorzugten Ausführungsform wird die Bindungsschicht aus denselben Schäumpartikeln hergestellt, die auch beim späteren Schäumvorgang
eingesetzt werden. Hierzu wird gemäß einer Verfahrensvariante das Trägermaterial im ersten Verfahrensschritt mindestens an seiner Oberfläche in einen haftungsfähigen Zustand (Haftungsschicht) überführt, und dann werden die Schäumpartikel, vorzugsweise in einer Monolage, aufgebracht.

Die Haftung der Schäumpartikel am Trägermaterial kann noch dadurch verbessert werden, daß die Schäumpartikel teilweise in die Haftungsschicht des Trägermaterials eingedrückt werden. Während bei den bekannten Verfahren nur ein Ansintern der Schäumpartikel am Trägermaterial erfolgt, wird bei dem ersten Verfahrensschritt eine innige Verbindung zwischen Trägermaterial und Schäumpartikeln hergestellt. Im zweiten Verfahrensschritt werden dann die Schäumpartikel, die sich auf dem Trägermaterial befinden, mit weiteren Schäumpartikeln verbunden, die in den Hohlraum der Schäumvorrichtung eingebracht werden. Es hat sich herausgestellt, daß die Verbindung der auf dem Trägermaterial aufgebrachten Schäumpartikel mit den in den Formhohlraum eingebrachten Schäumpartikeln genauso gut ist wie die Verbindung der eingebrachten Schäumpartikel untereinander. Es wird somit ein Formkörper geschaffen, dessen Trägermaterial sich nicht mehr vom Schaumkörper ablösen läßt.

Beim Schäumprozess in der Form werden die Hohlräume, die bei der Partikelbeschichtung zwangsläufig zwischen den einzelnen Schäumpartikeln vorhanden sind, durch die in den Formhohlraum eingebrachten Schäumpartikel ausgefüllt bzw. die vorhandenen Schäumpartikel der Partikelschicht werden bis zu einem gewissen Grad zusammengedrückt. An der Einbettung der Schäumpartikel im Trägermaterial ändert sich beim Schäumvorgang im Formhohlraum nichts.

Die Haftungsschicht kann anstelle einer Oberflächenveränderung des Trägermaterials auch als Klebstoffschicht realisiert werden, die aus Latex oder PE-Pulver bestehen kann, wobei die Schäumpartikel vorzugsweise in die Haftungsschicht eingedrückt werden.

Bei dünnem Trägermaterial können sich u.U. die Schäumpartikel der Bindungsschicht durchdrücken und somit an der Außenfläche abzeichnen, was zu einer nicht gewollten Oberflächenveränderung des Trägermaterials führt. Dies kann dadurch vermieden werden, daß das Trägermaterial zur Ausbildung der Bindungsschicht vorzugsweise mit einer Beschichtung versehen wird, die auf der dem Trägermaterial abgewandten Seite eine rauhe Oberfläche aufweist, wodurch ebenfalls eine gute Haltung der im zweiten Verfahrensschritt aufgeschäumten Schäumpartikel erzielt wird. Diese rauhe Oberflächenbeschichtung kann aufgespritzt oder mittels Walzen oder Rakel aufgetragen werden.

Anstelle der Schäumpartikel der Bindungsschicht können gemäß einer weiteren Ausführungsform Recyclingpartikel auf das Trägermaterial aufgebracht werden. Unter Recyclingpartikeln werden solche Teilchen verstanden, die bei einem Recyclingverfahren durch mechanische Zerkleinerung schon benutzter Formteile als sonst nicht zu verwertender Staub- und Kleinteilchenanteil anfallen.

Diese Teilchen, vorzugsweise in einer Größe bis zu 1,6 mm², weisen gegenüber den kugelförmigen, aufgeschäumten Partikeln eine sehr unregelmäßig geformte Oberfläche auf, was den gewünschten Haftungseffekt vergrößert. Darüber hinaus kann in diesem Falle die Trägerschicht wesentlich dünner gehalten werden, ohne daß sich die Struktur der Partikel auf der Oberfläche des fertigen Verbundteiles abzeichnet.

Die Haftungsschicht kann ebenfalls durch Überführen mindestens eines Oberflächenbereiches des Trägermaterials oder durch Aufbringen einer Klebeschicht hergestellt werden, wobei die Recyclingpartikel vorzugsweise ebenfalls in die Haftungsschicht eingedrückt werden.

Damit der Formkörper an seiner Außenseite vorgegebene Anforderungen hinsichtlich Aussehen, Widerstandsfähigkeit, Sterilisationsbeständigkeit oder dergleichen erfüllen kann, was das Trägermaterial aufgrund seiner Eigenschaften eventuell nicht leisten kann, kann vorzugweise vor dem Aufbringen der Bindungsschicht das Trägermaterial auf der der Bindungsschicht abgewandten Seite mit mindestens einem weiteren Schichtmaterial verbunden werden.

Vorzugsweise besteht das Trägermaterial aus einem thermoplastischen oder thermisch verformbaren Polymerfilm. Dieser kann durch Extrusion, Koextrusion, Blasformen oder Blasextrusion hergestellt werden.

Wenn der Polymerfilm durch Extrusion hergestellt wird, ist es vorteilhaft, wenn unmittelbar an die Extrusion das Aufbringen der Schäumpartikel oder Recyclingpartikel angeschlossen wird, da sich der Polymerfilm dann noch im plastischen Zustand befindet, und ein Aufheizen der Oberfläche des Polymerfilms somit nicht erforderlich ist.

Anstelle einer Polymerfolie können auch andere Trägermaterialien zum Einsatz kommen. Hierzu zählen Stützmaterialien, die mit einer Haftungsschicht aus Latex oder PE-Pulver versehen sind, wobei diese als Klebstoffe wirkenden Materialien vor dem Aufbringen der Schäumpartikel in den haftungsfähigen Zustand überführt werden.

Es ist sowohl eine einseitige als auch eine zweiseitige Beschichtung des Trägermaterials mit der Bindungsschicht möglich. Bei der zweiseitigen Beschichtung können nacheinander zunächst die eine Seite und dann die andere Seite beispielsweise mit den Schäumpartikeln oder Recyclingpartikeln nach entsprechendem Aufheizen der jeweiligen Oberflächenschicht des Trägermaterials versehen werden. Es besteht aber auch die Möglichkeit, das Trägermaterial vertikal zu führen und die Schäumpartikel oder Recyclingpartikel beidseitig gleichzeitig auf das Trägermaterial aufzubringen.

Wenn der vorgefertigte Verbund aus Trägermaterial und Bindungsschicht in die Form der Schäumvorrichtung eingebracht wird, so kann beim Ausschäumen gleichzeitig ein Prägen des Trägermaterials, das Ausbilden einer Narbung oder das Einbringen eines Schriftzuges erfolgen.

Das vorgefertige Verbundmaterial kann entweder von der Rolle in die Schäumvorrichtung eingeführt werden oder als einzelne Zuschnitte eingelegt werden. Bei der Herstellung des Formkörpers wird der vorgefertigte Verbund wahrend des Ausschäumens entsprechend verformt.

Der Formkörper ist dadurch gekennzeichnet, daß die Schäumpartikel mindestens über eine Bindungsschicht mit dem Trägermaterial verbunden sind, wobei diese Schäumpartikel aus demselben Matrixpolymermaterial bestehen wie die Bindungsschicht. Die Bindungsschicht kann ebenfalls Schäumpartikel aufweisen, die zusammen mit den übrigen Schäumpartikeln den Partikelschaum bilden.

Die Bindungsschicht kann auch aus Recyclingpartikeln oder einer Beschichtung mit einer rauhen Oberfläche gebildet sein. Vorzugsweise sind die Schäumpartikel oder die Recyclingpartikel in einer Haftungsschicht eingebettet, wodurch ein nahezu unlösbarer Verbund gebildet wird. Die Haftungsschicht kann eine Oberflächenschicht des Trägermaterials oder eine Klebstoffschicht sein.

Je nachdem, um welchen Formkörper es sich handelt und für welchen Einsatzzweck der Formkörper vorgesehen ist, können für das Trägermaterial und die Schäumpartikel identische oder unterschiedliche Materialien verwendet werden. Bei den Materialkombinationen ist jedenfalls die Affinität der einzelnen Materialien zueinander zu beachten.

Das Trägermaterial kann gemäß einer ersten Ausführungsform eine ein- oder mehrschichtige Polymerfolie aus modifizierten thermoplastischen Kunststoffen sein, wobei deren Oberflächenschicht die Haftungsschicht bildet, in die die Schäumpartikel oder Recyclingpartikel eingebettet sind. Das Trägermatertial kann Homo-PP, Block-PP oder Random-PP in gefüllter, ungefüllter oder modifizierter Form aufweisen. Dieses Material kann gut mit Schäumpartikeln oder Recyclingpartikeln aus EPE oder Schäumpartikeln bzw. Recyclingpartikeln aus einer Mischung aus LDPE und/oder MDPE und/oder HDPE mit Polystyrol kombiniert werden. Es können auch Schäumpartikel aus EPE, EPS, EPP oder EPMMA oder aus Mischungen dieser Materialien verwendet werden.

Wenn das Trägermaterial gemäß einer weiteren Ausführungsform ein Gemisch von Polypropylen/Polyethylen aufweist, wobei das Polyethylen ein HDPE, MDPE, LDPE oder EVA-LDPE ist, so kann der Partikelschaum aus EPE oder EPMMA bestehen.

Bei einer koextrudierten Folie, bei der die Außenseite aus Polyproylen und die den Schäumpartikeln zugewandte Seite aus modifizierten Polyolefinen bestehen kann, wie z.B. MSA-gepfropftes oder Acrylat-gepfropftes LDPE mit Polypropylen, ist aufgrund des Polypropylenanteils eine ausreichende Affinität zu EPS-Schäumpartikeln und zu der Polypropylenaußenschicht gewährleistet.

Gemäß einer weiteren Ausführungsform kann das Trägermaterial ein Stützmaterial mit einer Haftschicht aus Latex oder aufgestreutem Polyethylenpulver sein. Hierbei kann das Stutzmaterial ein Gewebe sein, das wiederum ein monofiles, multifiles oder ein Tuftinggewebe sein kann.

Weiterhin kommen Bändchengewebe oder Nadelfilz für das Stützmaterial in Frage. Monofile Gewebe werden vorzugsweise für die Außenschichten von Stoßstangen oder für Mehrwegcontainer verwendet, wobei das monofile Gewebe nicht nur einen Schutz des Partikelschaums darstellt, sondern auch bei beweglichen Teilen des Mehrwegcontainers eine Scharnierfunktion übernimmt.

Vorzugweise kann das Trägermaterial an seiner den Schäumpartikeln abgewandten Seite eine Metallfolie, beispielsweise aus Aluminum oder Kupfer tragen. In diesen Fällen eignet sich der Formkörper zur Auskleidung von Wohnwagen oder von Thermobehältern. Kupferfolien eignen sich für Formkörper, mit denen eine elektrische Abschirmung erzielt werden soll.

Die auf dem Trägermaterial zusätzlich aufgebrachte Folie kann auch eine Polymerfolie sein, die beispielsweise aus mineralgefülltem Homo-PP bestehen kann. Eine solche Polymerfolie kann eine Dekorfolie, insbesondere eine Holzdekorfolie sein, oder das Trägermaterial kann ein Holzfurnier tragen, so daß derartige Formkörper beispielsweise als Tischplatten oder für die Herstellung von Möbeln verwendet werden können.

Um die Stabilität des Formkörpers zu erhöhen, können Versteifungsmaterialien im Partikelschaum eingelagert sein. Vorzugsweise werden hierzu Kunststoffplatten mit entsprechenden Durchbrechungen verwendet.

Es besteht aber auch die Möglichkeit, irgenwelche Versteifungsprofile in den Partikelschaum einzulagern.

Anstelle von Versteifungsprofilen können auch Gewebe im Inneren des Partikelschaums vorhanden sein.

Wenn für die Herstellung von Formkörpern beidseitig beschichtete Trägermaterialien verwendet werden, so befindet sich das Trägermaterial im Inneren des Formkörpers.

Das erfindungsgemäße Verfahren erlaubt die Herstellung von Formkörpern, bei denen z.B. ein EPS oder ein anderer thermisch empfindlicher Partikelschaumkörper für Einwegverpackungen durch Verwendung eines entsprechenden Trägermaterials auch sterilisiert werden kann, so daß derartige Formkörper z.B. als Mehrwegverpackung insbesondere im Lebensmittelbereich eingesetzt werden können. Durch die Wahl der Trägermaterialien auf dem Partikelschaum sind die Verbundmaterialien so einstellbar, daß bei Wegfall der Gebrauchsfähigkeit ein Wertstoffrecycling zu Wertstoffgranulat und die Wiederverarbeitung im Extrusionsspritzguß- oder Preßverfahren gegeben ist.

Beispielhafte Ausführungsformen werden nachfolgend anhand der Zeichnungen näher erläutert.

Es zeigen
- Figur 1: einen Schnitt durch ein Verbundmaterial,
- Figur 2: eine vergrößerte Darstellung der Einzelheit X in Figur 1,
- Figuren 3, 4, 5, 6 und 7: Schnitte durch Verbundmaterialien gemäß weiterer Ausführungsformen und
- Figur 7: einen Schnitt durch eine Kiste.

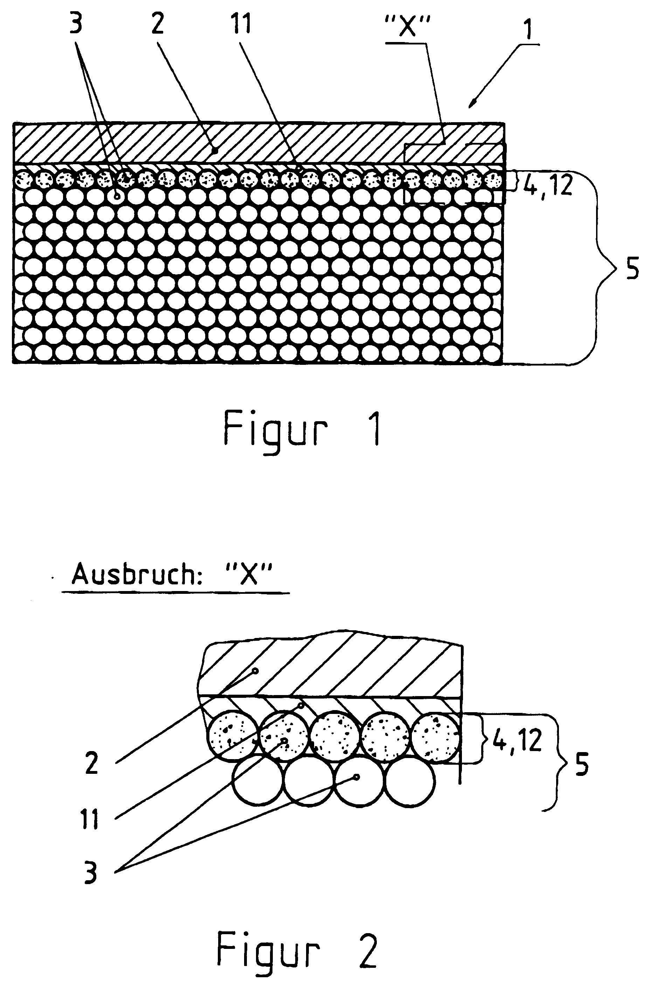

In der Figur 1 ist ein Schnitt durch einen Formkörper 1 dargestellt, der an seiner Außenseite als Trägermaterial 2 eine Polymerfolie aufweist und im übrigen aus dem Partikelschaum 5 besteht. An die Polymerfolie 2 grenzt eine Monolage 4 der Schäumpartikel 3 an, die die Bindungsschicht 12 bildet. Wie in Figur 2 dargestellt ist, sind die Schäumpartikel 3 der Bindungsschicht 12 zumindest teilweise in die Polymerfolie eingebettet. Der Bereich, in dem die Schäumpartikel 3 der Monolage 4 in der Polymerfolie eingebettet sind, bildet die Haftungsschicht 11 des Trägermaterials 2.

Die Schäumpartikel 3 der Monolage 4 werden durch den Schäumprozeß in einer Schäumvorrichtung auf übliche Weise mit den übrigen Schäumpartikeln 3 verbunden. Die Schäumpartikel 3 der Monolage 4 sind i.a. genauso groß wie die Schäumpartikel 3 des restlichen Partikelschaums 5. Die Hohlräume der Monolage 4 werden durch die benachbarten Schäumpartikel 3 weitgehend ausgefüllt.

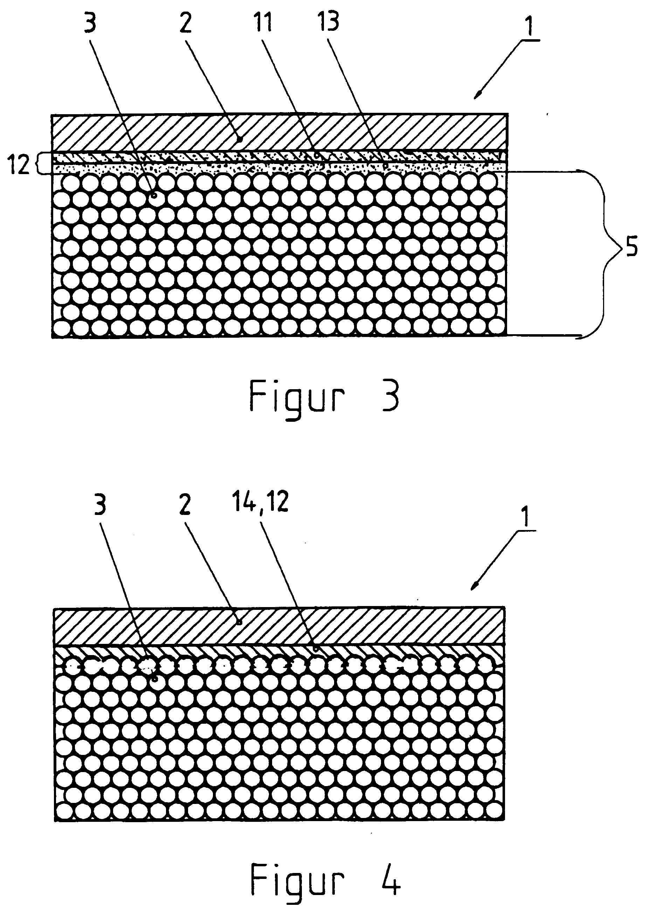

In der Figur 3 ist auf dem Trägermaterial als Haftungsschicht 11 eine Klebstoffschicht aufgebracht, in die die Recyclingpartikel 13 eingelagert sind, die die Bindungsschicht 12 bilden. Die Recyclingpartikel 13 bestehen aus demselben Polymermatrixmaterial wie die Schäumpartikel 3 des Partikelschaums 5.

In der Figur 4 ist eine Ausführungsform dargestellt, bei der die Bindungsschicht 12 aus einer Beschichtung 14 mit einer rauhen Oberfläche besteht.

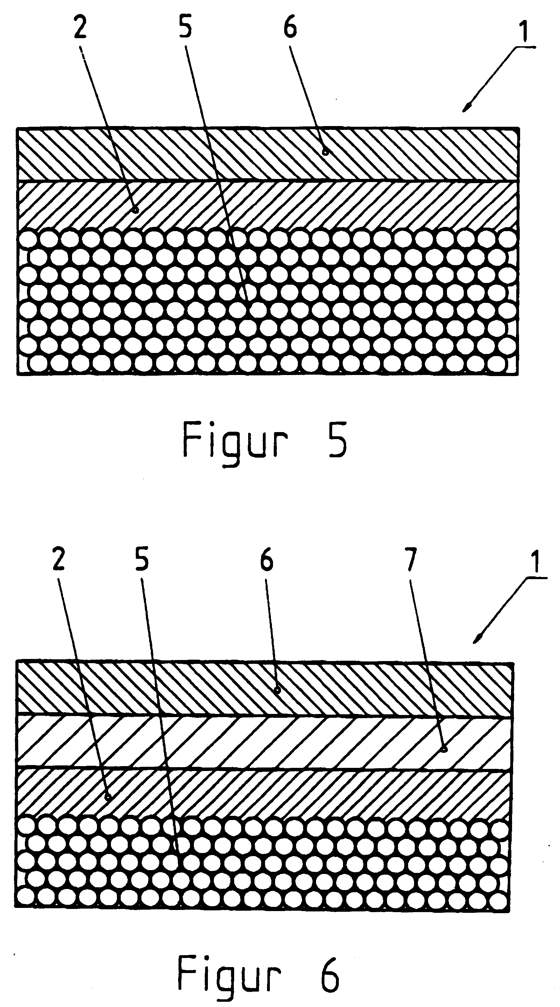

In der Figur 5 ist eine weitere Ausführungsform dargestellt, bei der auf der Polymerfolie, die das Trägermaterial 2 bildet, auf der Außenseite eine Außenschicht 6 aufgebracht ist. Die Verbindung der Polymerfolie und der Außenschicht 6 erfolgt vor dem Aufbringen der Partikelbeschichtung. Bei der Außenschicht 6 kann es sich beispielsweise um eine Dekorfolie oder um eine Metallschicht handeln.

Bei der Ausführungsform gemäß der Figur 6 weist der Formkörper 1 insgesamt drei Schichten 2, 6 und 7 auf. Das Trägermaterial 2 ist bei dieser Ausführungsform mit zwei weiteren Schichten 6, 7 an der Außenseite verbunden, die wie in der Figur 5 vor der Partikelbeschichtung mit dem Trägermaterial 2 verbunden werden. Bei den Schichten 2, 6 und 7 kann es sich um eine Koextrusionsfolie handeln, wobei die einzelnen Schichten 2, 6 und 7 aus unterschiedlichen Materialien bestehen können. Es ist aber auch möglich, daß die Schichten 2 und 7 eine Koextrusionsfolie sind, und daß die Schicht 6 beispielsweise aus einer Metallschicht besteht. Eine andere Möglichkeit besteht darin, die Schichten 6 und 7 als Koextrusionsfolie auf das Trägermaterial 2 aufzubringen, das eine Polymerfolie oder ein Gewebe sein kann. Es gibt unterschiedliche Materialkombinationen, wobei jeweils darauf geachtet werden muß, daß das Trägermaterial 2 eine entsprechende Affinität zu dem Material der Bindungsschicht 12 und zu dem Material der Schicht 7 bzw. 6 aufweist, so daß eine entsprechende Haltung aller Verbundmaterialien gegeben ist.

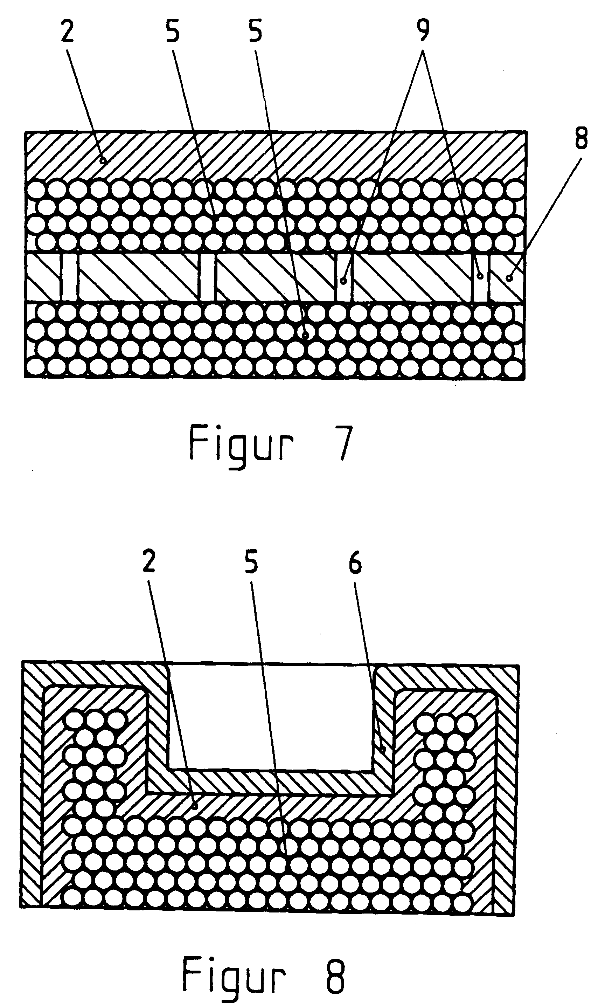

In der Figur 7 ist eine weitere Ausführungsform dargestellt, wobei im Partikelschaum 5 ein Versteifungsmaterial in Form einer Kunststoffplatte 8 mit Durchbrechungen 9 eingelagert ist.

In der Figur 8 ist ein Schnitt durch eine Kiste dargestellt, bei der das Trägermaterial 2 an der Außenseite mit einer Außenschicht 6 versehen ist, die beispielsweise sterilisierbar ist. Es wird dadurch möglich, einen Formkörper herzustellen, der trotz wärmeempfindlichem Partikelschaummaterial 5 durch das entsprechende Vorsehen einer Außenschicht 6 dampfsterilisierbar ist.

## Patentansprüche

1. Verfahren zur Herstellung eines Formkörpers aus Verbundmaterial, bei dem ein Trägermaterial (2) mit einem Partikelschaum (5) aus Polymeren verbunden wird, dadurch gekennzeichnet,
daß zur Herstellung einer Bindungsschicht (12) Schäumpartikel (3) oder Recyclingpartikel (13) auf das Trägermaterial (2) aufgebracht werden, und
daß ein vorgefertigter Verbund aus dem Trägermaterial (2) und der Bindungsschicht (12) in eine Schäumvorrichtung eingelegt wird, wobei die Bindungsschicht (12) dem auszuschäumerden Hohlraum zugewandt ist, und der Hohlraum dann mit Schäumpartikeln (3) ausgeschäumt wird, die aus demselben Polymermatrixmaterial wie die Bindungsschicht (12) bestehen.

2. Verfahren nach Anspruch 1, dadurch gekennzeichnet, daß zur Ausbildung einer Haftungsschicht (11) das Trägermaterial (2) mindestens an seiner Oberfläche in einen haftungsfähigen Zustand überführt wird oder das Trägermaterial (2) mit einer Klebstoffschicht versehen wird, auf die die Schäumpartikel (3) oder Recyclingpartikel (13) der Bindungsschicht (12) aufgebracht werden.

3. Verfahren nach einem der Ansprüche 1 oder 2, dadurch gekennzeichnet, daß die Schäumpartikel (3) der Bindungsschicht (12) in einer Monolage (4) aufgebracht werden.

4. Verfahren nach einem der Ansprüche 2 oder 3, dadurch gekennzeichnet, daß die Schäumpartikel (3) oder die Recyclingpartikel (13) der Bindungsschicht teilweise in das Trägermaterial (2) oder die Klebstoffschicht eingedrückt werden.

5. Verfahren nach einem der Ansprüche 2 bis 4, dadurch gekennzeichnet, daß die Klebstoffschicht aus Latex oder einem PE-Pulver gebildet wird, und daß die Latexschicht oder PE-Pulverschicht vor dem Aufbringen der Schäumpartikel (3) oder Recyclingpartikel (13) in den haftungsfähigen Zustand überführt wird.

6. Verfahren nach Anspruch 1 bis 5, dadurch gekennzeichnet, daß vor dem Aufbringen der Bindungsschicht (12) das Trägermaterial (2) mit mindestens einem weiteren Schichtmaterial (6,7) auf der der Bindungsschicht (12) abgewandten Seite verbunden wird.

7. Verfahren nach Anspruch 1 oder 6, dadurch gekennzeichnet, daß das Trägermaterial (2) aus einem thermoplastischen oder thermisch verformbaren Polymerfilm besteht.

8. Verfahren nach einem der Ansprüche 1 bis 7, dadurch gekennzeichnet, daß der Polymerfilm durch Extrusion, Koextrusion, Blasformen oder Blasextrusion hergestellt wird.

9. Verfahren nach Anspruch 8, dadurch gekennzeichnet, daß der Polymerfilm nach der Extrusion in noch plastischem Zustand mit den Schäumpartikeln (3) oder den Recyclingpartikeln (13) versehen wird.

10. Formkörper. der mindestens aus Trägermaterial (2) und Partikelschaum (5) aus Polymeren besteht, dadurch gekennzeichnet,
daß die Schäumpartikel (3) mindestens über eine außerhalb der Schäumvorrichtung aus Schäumpartikeln (3) oder Recyclingpartikeln hergestellten Bindungsschicht (12) mit dem Trägermaterial (2) verbunden sind, wobei die Schäumpartikel (3) aus demselben Matrix-Polymermaterial bestehen wie die Bindungsschicht (12), und
daß das Trägermaterial (2) unlösbar mit dem Partikelschaum (5) verbunden ist.

11. Formkörper nach Anspruch 10, dadurch gekennzeichnet, daß die Schäumpartikel (3) der Bindungsschicht (12) zusammen mit den übrigen Schäumpartikeln (3) den Partikelschaum (5) bilden.

12. Formkörper nach Anspruch 10 oder 11, dadurch gekennzeichnet, daß die Schäumpartikel (3) in einer Haftungsschicht (11) eingebettet sind.

13. Formkörper nach Anspruch 12 dadurch gekennzeichnet, daß die Haftungsschicht (11) eine Oberflächenschicht des Trägermaterials (2) oder eine Klebstoffschicht ist.

14. Formkörper nach einem der Ansprüche 10 bis 13, dadurch gekennzeichnet, daß das Trägermaterial (2) eine ein- oder mehrschichtige Polymerfolie aus modifizierten thermoplastischen Kunststoffen ist.

15. Formkörper nach einem der Ansprüche 10 bis 14, dadurch gekennzeichnet, daß das Trägermaterial (2) Homo-PP, Block-PP oder Random-PP in gefüllter, ungefüllter oder modifizierter Form, MSA-gepfropftes oder Acrylat-gepfropftes LDPE mit Polypropylen oder ein Gemisch von Polypropylen/Polyethylen aufweist, wobei das Polyethylen ein HDPE, MDPE, LDPE oder EVA-LDPE ist.

16. Formkörper nach einem der Ansprüche 10 bis 15, dadurch gekennzeichnet, daß die Schäumpartikel (3) EPE, EPS, EPP oder EPMMA oder Mischungen dieser Materialien oder eine Mischung LDPE und/oder MDPE und/oder HDPE mit Polystyrol aufweisen.

17. Formkörper nach einem der Ansprüche 10 bis 16, dadurch gekennzeichnet, daß das Trägermaterial (2) an seiner den Schäumpartikeln (3) abgewandten Seite ein Gewebe, eine Metallfolie, eine weitere Polymerfolie (6,7) oder ein Holzfurnier trägt.

18. Formkörper nach Anspruch 17, dadurch gekennzeichnet, daß die weitere Polymerfolie (6, 7) mineralgefülltes Homo-PP aufweist oder eine Holzdekorfolie ist.

19. Formkörper nach einem der Ansprüche 10 bis 18, dadurch gekennzeichnet, daß im Partikelschaum (5) Versteifungsmaterial (8) eingelagert ist.

## Claims

1. Process for the production of a moulded part made from composite material, in which a carrier material (2) is bonded to a particle foam (5) made from polymers, characterised in that
foaming particles (3) or recycling particles (13) are applied to the carrier material (2) to produce a binding layer (12), and
a prefabricated composite made from the carrier material (2) and the binding layer (12) is inserted into a foaming device, whereby the binding layer (12) faces the cavity to be foamed, and the cavity is then foamed out with foaming particles (3) made from the same polymer matrix material as the binding layer (12).

2. Process according to claim 1, characterised in that, in order to form an adhesion layer (11), at least the surface of the carrier material (2) is converted to an adhesive state, or the carrier material (2) is given an adhesive layer on which are applied the foaming particles (3) or recycling particles (13) of the binding layer (12).

3. Process according to one of claims 1 or 2, characterised in that the foaming particles (3) of the binding layer (12) are applied in a monolayer (4).

4. Process according to one of claims 2 or 3, characterised in that the foaming particles (3) or the recycling particles (13) of the binding layer are pressed partially into the carrier material (2) or the adhesive layer.

5. Process according to one of claims 2 to 4, characterised in that the adhesive layer is formed from latex or a PE powder, and that the latex layer or the PE powder layer is converted to an adhesive state prior to application of the foaming particles (3) or recycling particles (13).

6. Process according to claims 1 to 5, characterised in that prior to application of the binding layer (12), the side of the carrier material (2) facing away from the binding layer (12) is bonded to at least one additional layer material (6, 7).

7. Process according to claim 1 or 6, characterised in that the carrier material (2) comprises a thermoplastic or thermally formable polymer film.

8. Process according to one of claims 1 to 7, characterised in that the polymer film is produced by extrusion, co-extrusion, blow forming or blow extrusion.

9. Process according to claim 8, characterised in that the foaming particles (3) or the recycling particles (13) are applied to the polymer film while it is still in a plastic state following extrusion.

10. Moulded part, consisting at least of carrier material (2) and particle foam (5) made from polymers, characterised in that
the foaming particles (3) are bonded to the carrier material (2) at least by one binding layer (12) made outside the foaming device from foaming particles (3) or recycling particles, wherein the foaming particles (3) are made from the same matrix polymer material as the binding layer (12), and
the carrier material (2) is indissolubly bonded to the particle foam (5).

11. Moulded part according to claim 10, characterised in that the foaming particles (3) of the binding layer (12) form the particle foam (5) in conjunction with the remaining foaming particles (3).

12. Moulded part according to claim 10 or 11, characterised in that the foaming particles (3) are embedded in an adhesion layer (11).

13. Moulded part according to claim 12, characterised in that the adhesion layer (11) is a surface layer of the carrier material (2) or is an adhesive layer.

14. Moulded part according to one of claims 10 to 13, characterised in that the carrier material (2) is a single-layer or multi-layer polymer foil made from modified thermoplastic plastics.

15. Moulded part according to one of claims 10 to 14, characterised in that the carrier material (2) comprises homo PP, block PP or random PP in filled, unfilled or modified form, MSA-grafted or acrylate-grafted LDPE with polypropylene or a mixture of polypropylene/polyethylene, the polyethylene being an HDPE, MDPE, LDPE or EVA-LDPE.

16. Moulded part according to one of claims 10 to 15, characterised in that the foaming particles (3) comprise EPE, EPS, EPP or EPMMA or mixtures of these materials or a mixture of LDPE and/or MDPE and/or HDPE with polystyrene.

17. Moulded part according to one of claims 10 to 16, characterised in that on its side facing away from the foaming particles (3) the carrier material (2) supports a fabric, a metal foil, an additional polymer foil (6, 7) or a wood veneer.

18. Moulded part according to claim 17, characterised in that the additional polymer foil (6, 7) comprises mineral-filled homo PP or is a wood decorative foil.

19. Moulded part according to one of claims 10 to 18, characterised in that stiffening material (8) is embedded in the particle foam (5).

## Revendications

1. Procédé pour produire un corps moulé en matériau composite, dans lequel un matériau support (2) est lié à une mousse de particules (5) en polymères, caractérisé en ce que,
des particules de mousse (3) ou des particules recyclées (13) sont appliquées sur le matériau support (2) pour produire une couche de liaison (12), et
un composite préfabriqué constitué du matériau support (2) et de la couche de liaison (12) est déposé dans un dispositif de moussage, la couche de liaison (12) étant tournée vers l'espace creux à garnir de mousse, et l'espace creux étant alors garni de mousse avec des particules de mousse (3) qui sont constituées du même matériau de matrice polymère que la couche de liaison (12).

2. Procédé selon la revendication 1, caractérisé en ce que pour former une couche adhésive (11), le matériau support (2) est transformé au moins au niveau de sa surface en un état apte à adhérer ou bien le matériau support (2) est muni d'une couche d'adhésif sur laquelle les particules de mousse (3) ou les particules recyclées (13) de la couche de liaison (12) sont appliquées.

3. Procédé selon l'une quelconque des revendications 1 ou 2, caractérisé en ce que les particules de mousse (3) de la couche de liaison (12) sont appliquées en une monocouche(4).

4. Procédé selon l'une quelconque des revendications 2 ou 3, caractérisé en ce que les particules de mousse (3) ou les particules recyclées (13) de la couche de liaison sont enfoncées partiellement dans le matériau support (2) ou la couche d'adhésif.

5. Procédé selon l'une quelconque des revendications 2 à 4, caractérisé en ce que la couche d'adhésif est formée de latex ou d'une poudre de PE, et que la couche de latex ou la couche de poudre de PE est transformée en un état apte à adhérer avant l'application des particules de mousse (3) ou des particules recyclées (13).

6. Procédé selon les revendications 1 à 5, caractérisé en ce que, le matériau support (2) est lié avec au moins un matériau de couche supplémentaire (6,7) sur le côté tourné à l'opposé de la couche de liaison (12), avant application de la couche de liaison (12).

7. Procédé selon la revendication 1 ou 6, caractérisé en ce que le matériau support (2) est constitué d'un film polymère thermoplastique ou thermiquement façonnable.

8. Procédé selon l'une quelconque des revendications 1 à 7, caractérisé en ce que le film polymère est produit par extrusion, co-extrusion, soufflage ou extrusion par soufflage.

9. Procédé selon la revendication 8, caractérisé en ce que le film polymère après l'extrusion dans un état encore plastique est pourvu de particules de mousse (3) ou de particules recyclées (13).

10. Corps moulé qui est constitué au moins de matériau support (2) et de mousse de particules (5) en polymères, caractérisé en ce que, les particules de mousse (3) sont liées au matériau support (2) par au moins une couche de liaison (12) produite à partir de particules de mousse (3) ou de particules de recyclage en dehors du dispositif de moussage, dans lequel les particules de mousse (3) sont constituées du même matériau polymère de matrice que celui de la couche de liaison (12), et que le matériau support (2) est lié de manière indissociable à la mousse de particules (5).

11. Corps moulé selon la revendication 10, caractérisé en ce que les particules de mousse (3) de la couche de liaison (12) conjointement avec les particules de mousse restantes (3) forment la mousse de particules (5).

12. Corps moulé selon la revendication 10 ou 11, caractérisé en ce que les particules de mousse (3) sont noyées dans une couche d'adhérence (11).

13. Corps moulé selon la revendication 12, caractérisé en ce que la couche d'adhérence (11) est une couche superficielle du matériau support (2) ou une couche d'adhésif.

14. Corps moulé selon l'une quelconque des revendications 10 à 13, caractérisé en ce que le matériau support (2) est une feuille de polymère mono- ou multicouche constituée de matières thermoplastiques modifiées.

15. Corps moulé selon l'une quelconque des revendications 10 à 14, caractérisé en ce que le matériau support (2) comporte du PP homopolymère, du PP séquencé ou du PP statistique sous forme chargée, non chargée ou modifiée, du LDPE greffé avec MSA ou greffé avec un acrylate avec du polypropylène ou un mélange de polypropylène/polyéthylène, dans lequel le polyéthylène est un HDPE, MDPE, LDPE ou EVA/LDPE.

16. Corps moulé selon l'une quelconque des revendications 10 à 15, caractérisé en ce que les particules de mousse (3) comportent EPE, EPS, EPP ou EPMMA ou des mélanges de ces matériaux ou un mélange de LDPE et/ou MDPE et/ou HDPE avec du polystyrol.

17. Corps moulé selon l'une quelconque des revendications 10 à 16, caractérisé en ce que le matériau support (2) au niveau de son côté détourné des particules de mousse (3), porte un tissu, une feuille métallique, une feuille polymère supplémentaire (6, 7) ou un placage de bois.

18. Corps moulé selon la revendication 17, caractérisé en ce que la feuille polymère supplémentaire (6, 7) comprend un PP homopolymère à charge minérale ou constitue une feuille décorative de bois.

19. Corps moulé selon l'une quelconque des revendications 10 à 18, caractérisé en ce qu'un matériau de renforcement (8) est incorporé dans la mousse de particules (5).
